(19) Europäisches Patentamt
European Patent Office
Office européen des brevets

(11) Numéro de publication: **0 424 235 A1**

# (12) DEMANDE DE BREVET EUROPEEN

(21) Numéro de dépôt: **90402882.6**

(51) Int. Cl.[5]: **C01B 21/098**, C08G 79/02

(22) Date de dépôt: **16.10.90**

(30) Priorité: **20.10.89 FR 8913752**

(43) Date de publication de la demande:
**24.04.91 Bulletin 91/17**

(84) Etats contractants désignés:
**AT BE CH DE DK ES FR GB GR IT LI LU NL SE**

(71) Demandeur: **ATOCHEM**
**4 & 8, Cours Michelet La Défense 10**
**F-92800 Puteaux(FR)**

(72) Inventeur: **De Jaeger, Roger**
**8 Rue des Buissons, Grusons**
**F-59152 Chereng(FR)**
Inventeur: **Pagniez, Guy**
**2 Bois de l'Eglise**
**F-64230 Poey de l'Escar(FR)**
Inventeur: **Potin, Philippe**
**9 Rue des Paquerettes**
**F-64140 Billère(FR)**

(74) Mandataire: **Rochet, Michel et al**
**ATOCHEM Département Propriété**
**Industrielle La Défense 10 Cédex 42**
**F-92091 Paris La Défense(FR)**

## (54) Procédé de régulation des masses moléculaires de polydichlorophosphazènes.

(57) L'invention a pour objet un procédé de régulation des masses moléculaires des polydichlorophosphazènes.

Ce procédé, qui permet de réduire la masse moléculaire à une valeur déterminée, consiste à chauffer le polydichlorophosphazène en présence d'oxychlorure de phosphore.

Les polydichlorophosphazènes peuvent conduire, après substitution, à une large gamme de polyorganophosphazènes.

EP 0 424 235 A1

## PROCEDE DE REGULATION DES MASSES MOLECULAIRES DE POLYDICHLOROPHOSPHAZENES

La présente invention a pour objet un procédé de régulation des masses moléculaires des polydichlorophosphazènes et des polyorganophosphazènes en dérivant.

Les polyorganophosphazènes représentent une vaste famille de polymères qui sont tous constitués d'un squelette formé d'un enchaînement -N=P- sur lequel sont greffés des groupements organiques de natures variées tels que des groupements alcoxy, aryloxy, sulfure, amino, etc... Cette diversité de structure confère aux polyphosphazènes un champ d'applications potentielles particulièrement large parmi lesquelles on peut citer, entre autres, les mousses ignifuges d'isolation ou de coussinage, les revêtements ignifuges, les élastomères spéciaux, les polymères conducteurs, les applications biomédicales.

L'ensemble de ces polyphosphazènes ne peut être préparé à une échelle industrielle qu'à partir d'un intermédiaire commun qui est le polydichlorophosphazène. Le passage de cet intermédiaire à un polyorganophosphazène se fait en substituant les chlores par un réactif organique, selon la réaction suivante :

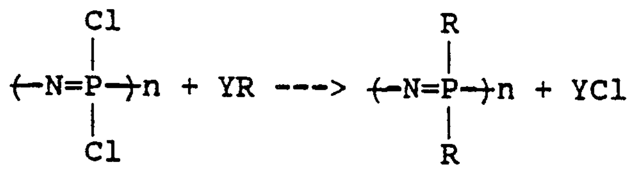

où R est un groupement organique quelconque, en particulier ceux cités précédemment, et Y un métal en général alcalin ou un atome d'hydrogène.

Quel que soit le mode de substitution, il est nécessaire de disposer d'un polydichlorophosphazène dont la masse moléculaire soit adaptée à l'application recherchée. Il faut donc pouvoir maîtriser le niveau de cette masse moléculaire. Jusqu'à présent, trois voies ont été décrites pour la préparation du polydichlorophosphazène. Allcock et Kugel (brevet US 3 370 020) ont proposé de chauffer l'hexachloro-triphospha zène cyclique jusqu'à ce qu'environ 50 % de ce précurseur soit transformé en polymère. De cette façon, le polydichlorophosphazène ne contient qu'une faible teneur en gel réticulé. Il se présente essentiellement sous une forme linéaire, donc soluble, ce qui permet de le transformer par substitution :

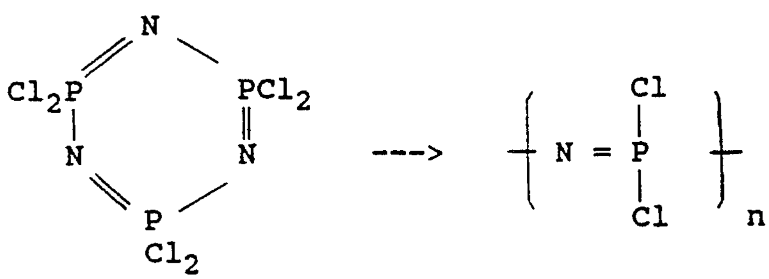

Ce procédé ne permet pas d'arrêter la croissance des chaînes au niveau désiré et ainsi les masses moléculaires atteintes sont aléatoires et en général très élevées.

Un autre procédé de préparation de polydichlorophosphazène consiste à polycondenser des oligomères du type $Cl_3P\text{-}(N=PCl_2)_x\text{-}Cl^+PCl_6^-$, en présence de chlorure d'ammonium (Hornbaker et Li brevet US 4 198 381), mais ce procédé ne conduit qu'à des masses moléculaires assez faibles. Plus récemment, il a été proposé un procédé qui opère par polycondensation du N-dichlorophosphoryl P-trichlorophosphazène (De Jaeger, Heloui et Puskaric brevet français 2 466 435), selon le schéma :

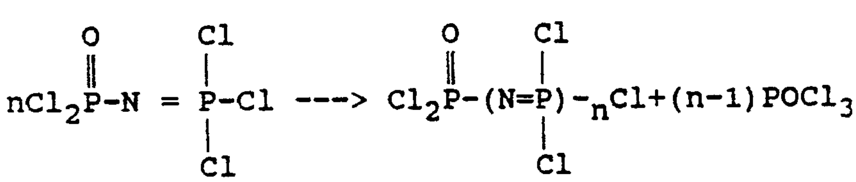

Avec ce procédé il n'y a aucune formation de gels réticulés, ce qui permet de conduire la polycondensation jusqu'à une conversion totale et la croissance des chaînes s'effectue progressivement en fonction du temps de séjour. Le niveau de masse moléculaire peut ainsi être correctement contrôlé en jouant sur la durée de polycondensation.

Dans le brevet français 2 571 710, De Jaeger, Pagniez, et Potin proposent d'effectuer au moins la phase de polycon densation dans un milieu dissolvant du monomère et du polymère, dans le but d'obtenir des degrés de polycondensation élevés de manière reproductible.

On peut assurer la régulation des masses moléculaires en introduisant un limitateur de chaînes dans le polycondensat (Pagniez, Passimourt, Potin, brevet français 87 09406). Il faut cependant noter que ce procédé de régulation par limitateur concerne essentiellement des niveaux de masse moléculaire faibles ou moyens.

Allcock et Gurdner (brevet US 3 917 802) ont proposé un procédé qui permet de réduire la masse moléculaire du polydichlorophosphazène. Le procédé consiste à chauffer ce polymère en présence de pentachlorure de phosphore ce qui entraîne des ruptures de liaisons P-N des chaînes. Ce procédé présente l'inconvénient de mettre en oeuvre un réactif qui est très corrosif et dont la manipulation est délicate, car il se présente sous la forme de blocs solides.

Le procédé qui fait l'objet de la présente invention permet de façon très simple et contrôlable de réduire la masse moléculaire d'un polydichlorophosphazène obtenu par n'importe quelle méthode et de polyorganophosphazènes dérivant des polydichlorophosphazènes

Ce procédé consiste à chauffer le polydichlorophosphazène en présence d'oxychlorure de phosphore.

Selon une première variante de ce procédé, on peut introduire dans le polydichlorophosphazène une quantité standard d'oxychlorure de phosphore permettant d'abaisser la masse moléculaire en-dessous du niveau souhaité, pour ensuite la remonter à ce niveau. Selon une seconde variante, on peut introduire la quantité d'oxychlorure de phosphore juste nécessaire pour abaisser la masse moléculaire exactement au niveau souhaité.

Lorsque l'on opère par ajout d'une quantité standard d'oxychlorure de phosphore, c'est-à-dire en abaissant la masse moléculaire en-dessous du niveau souhaité, puis en la remontant à ce niveau, on effectue la première opération par chauffage du mélange dans un réacteur fermé et la deuxième opération en baissant la concentration d'oxychlorure de phosphore dans la phase liquide du réacteur par ouverture totale ou partielle de ce réacteur sur l'atmosphère. Ainsi, lorsque l'on dispose d'un polydichlorophosphazène à l'état pur, provenant soit de la polymérisation de l'hexachlorotriphosphazène cyclique ou de la polycondensation en masse du N-dichlorophosphoryl P-trichlorophosphazène, l'élimination de l'oxychlorure de phosphore excédentaire est assurée par un balayage du réacteur par un gaz inerte, ou par une mise sous vide partiel du réacteur, ou par un maintien du réacteur à pression atmosphérique, sous gaz inerte et connexion de sa phase gazeuse avec une zone froide sur laquelle l'oxychlorure de phosphore peut venir se condenser. Les mêmes opérations peuvent être effectuées lorsque le polydichlorophosphazène est en solution dans un solvant dont le point d'ébullition est supérieur à celui de la réaction. Par contre, lorsque le polydichlorophosphazène est en solution dans un solvant dont le point d'ébullition est inférieur à la température de réaction, il est possible d'abaisser la concentration en oxychlorure de phosphore dans la phase liquide, soit en maintenant une ébullition continue du solvant sous une pression adaptée, soit en distillant une ou plusieurs fractions de ce solvant, fractions qui pourront éventuellement être remplacées par du solvant frais.

Lorsque l'on souhaite abaisser directement la masse moléculaire au niveau souhaité, il est bien évidemment nécessaire de déterminer préalablement la quantité d'oxychlorure de phosphore à mettre en jeu. Cette quantité dépend du niveau de masse moléculaire initial que l'on veut réduire, du niveau de masse moléculaire final que l'on veut atteindre et des équilibres de concentration en oxychlorure de phosphore entre la phase liquide de polycondensation et la phase gazeuse du réacteur, cet équilibre étant régi par la température, la concentration du polydichlorophosphazène dans un solvant éventuel, le rapport des volumes des deux phases et l'importance relative des zones froides du réacteur. Si l'on veut atteindre directement le niveau de masse moléculaire souhaité, sans avoir à effectuer ensuite une remontée à ce niveau, il sera néces saire d'établir la relation "masse moléculaire/quantité d'oxychlorure de phosphore introduit" en fixant tous les autres paramètres.

Les quantités d'oxychlorure de phosphore à introduire dans le polydichlorophosphazène peuvent donc varier dans une large mesure. On peut cependant préciser, à titre indicatif, que ces quantités sont le plus souvent inférieures à 20 % (moles d'oxychlorure de phosphore par motif $NPCl_2$ du polydichlorophosphazène), ces quantités pouvant le plus souvent être comprises entre 0,2 et 10 %. La température à laquelle cette réduction de masse moléculaire doit être effectuée dépend bien entendu des conditions matérielles dont on dispose et de la vitesse que l'on souhaite. Cette température peut être comprise entre 200 et

350 °C ; dans la pratique on opère généralement entre 230 et 300 °C. La durée de cette opération de réduction de la masse moléculaire peut varier généralement entre quelques dizaines de minutes et quelques heures, par exemple de 2 à 20 heures.

Dans le seul but d'illustration de cette invention, on donne ci-après deux exemples, l'un montrant la facilité avec laquelle il est possible de faire varier la masse moléculaire par introduction ou élimination d'oxychlorure de phosphore, l'autre montrant la relation que l'on peut établir entre l'oxychlorure de phosphore introduit et la masse moléculaire obtenue à l'équilibre.

## EXEMPLE 1

L'essai est effectué dans un réacteur agité de 2 l, équipé d'un chauffage par fluide caloporteur, d'un condenseur à reflux dont la température peut être régulée entre 20 et 150 °C et qui est lui-même connecté à un condenseur descendant régulé à 20 °C. Ce condenseur descendant est suivi d'une recette permettant la collecte des condensats du réacteur. Le réacteur est également équipé d'une entrée de réactifs, d'une prise d'échantillons, de systèmes de pressurisation et de balayage à l'azote, ainsi que d'un thermocouple pour la mesure de la température interne.

Dans ce réacteur maintenu sous pressurisation d'azote et avec une température de condenseur à reflux de 130 °C, on introduit 1224 g de N-dichlorophosphoryl P-trichlorophosphazène que l'on chauffe à 250 °C. On observe un dégagement d'oxychlorure de phosphore pendant 8 h. Lorsque ce dégagement cesse, on balaye le ciel du réacteur par un courant d'azote. On note à nouveau un dégagement d'oxychlorure de phosphore qui cesse au bout de 30 mn de balayage. Le réacteur est remis sous pressurisation d'azote et l'on introduit 1710 g de trichlorodiphényle. L'ensemble est maintenu à 250 °C. L'évolution de la polycondensation est suivie par prises d'échantillons et mesure de la viscosité intrinsèque du polydichlorophosphazène dans le THF additionné de 0,85 % de LiBr et de 0,20 % de triméthylchlorosilane. La polycondensation est arrêtée au bout de 23 h lorsque la viscosité intrinsèque atteint 70 ml/g. A ce stade, on effectue la série d'opérations suivantes :

**1-** La température du condenseur à reflux est réglée à 20 °C et l'on introduit dans le réacteur 10,8 g d'oxychlorure de phosphore, soit 1,02 % molaires. L'ensemble est maintenu à 276 °C pendant 10 h à l'issue desquelles la viscosité intrinsèque est descendue à 61 ml/g.

**2-** Le condenseur à reflux est à nouveau régulé à 130 °C, le ciel du réacteur balayé à l'azote et le mélange réactionnel maintenu à 280 °C. Après 5 h, la viscosité intrinsèque du polydichlorophosphazène est remontée à 71,8 ml/g.

**3-** L'opération 1 est reproduite avec 5,5 % molaires d'oxychlorure de phosphore. Au bout de 12 h, la viscosité intrinsèque est descendue à 29 ml/g.

**4-** L'opération 2 est reproduite à partir du produit de l'opération 3, et après 8 h, la viscosité intrinsèque du polydichlorophosphazène est remontée à 71 ml/g.

## EXEMPLE 2

Dans le même réacteur et dans les mêmes conditions que celles décrites dans l'exemple 1, on effectue une polycondensation que l'on arrête après 24 h, lorsque le polydichlorophosphazène a atteint une viscosité intrinsèque de 72 ml/g. Le condenseur à reflux est alors régulé à 20 °C et, à partir de là, on introduit dans le réacteur des quantités successives d'oxychlorure de phosphore. Après chaque addition, l'ensemble est maintenu en réaction à 285 °C pendant 14 h au bout desquelles on effectue une mesure de viscosité intrinsèque. Le mélange est laissé dans les mêmes conditions pendant 7 h supplémentaires au bout desquelles on effectue à nouveau une mesure de viscosité intrinsèque. De cette façon, il est possible de contrôler que la réaction de dépolycondensation a été conduite jusqu'à son état d'équilibre.

Les résultats sont consignés dans le tableau suivant.

| | $POCl_3$ (%M) | V.I. (ml/g) |
|---|---|---|
| 1 | 0 | 71,83 |
| 2 | 0,65 | 64,64 |
| 3 | 1,023 | 60,90 |
| 4 | 1,363 | 60,17 |
| 5 | 1,691 | 52,58 |
| 6 | 2,042 | 49,86 |
| 7 | 2,685 | 41,43 |
| 8 | 3,296 | 38,19 |
| 9 | 3,856 | 34,66 |
| 10 | 4,527 | 31,58 |
| 11 | 5,509 | 29,04 |

Ce tableau permet, à titre purement indicatif, d'établir la relation suivante : (coefficient de corrélation : 0,99)

$\log y = - 0{,}1789x + 4{,}2743$

où y désigne la viscosité intrinsèque du polydichlorophosphazène (ml/g) et x désigne le % molaire de $POCl_3$ rapporté au polydichlorophosphazène de départ.

## Revendications

**1.** Procédé de régulation des masses moléculaires des polydichlorophosphazènes et des polyorganophosphazènes en dérivant, caractérisé en ce qu'il consiste à chauffer le polychlorophosphazène en présence d'oxychlorure de phosphore.

**2.** Procédé selon la revendication 1, caractérisé en ce qu'il consiste à préparer un polychlorophosphazène d'une certaine masse moléculaire, à le chauffer en présence d'une quantité d'oxychlorure de phosphore suffisante pour abaisser la masse moléculaire du polydichlorophosphazène à une valeur inférieure à la valeur désirée pour le polymère final, puis à faire remonter la masse moléculaire jusqu'à ladite valeur désirée en diminuant la concentration en oxychlorure de phosphore.

**3.** Procédé selon la revendication 1, caractérisé en ce qu'il consiste à préparer un polychlorophosphazène d'une certaine masse moléculaire puis à le chauffer en présence d'oxychlorure de phosphore en quantité permettant d'obtenir la valeur désirée pour la masse moléculaire finale du polydichlorophosphazène.

**4.** Procédé selon l'une quelconque des revendications 1 à 3, caractérisé en ce que la quantité d'oxychlorure de phosphore n'excède pas 20 % mole de $POCl_3$ par motif $NPCl_2$.

**5.** Procédé selon la revendication 4, caractérisé en ce que la quantité d'oxychlorure de phosphore est comprise entre 0,2 et 10 % du poids du polydichlorophosphazène.

**6.** Procédé selon l'une quelconque des revendications 1 à 5, caractérisé en ce que le chauffage du polydichlorophosphazène en présence d'oxychlorure de phosphore est effectué entre 200 et 350 °C.

**7.** Procédé selon la revendication 6, caractérisé en ce que la température de chauffage est comprise entre 230 et 300 °C.

**8.** Polydichlorophosphazènes tels qu'obtenus par application du procédé selon l'une quelconque des revendications 1 à 7.

**9.** Polyorganophosphazènes obtenus par substitution par des groupements organiques de tout ou partie des atomes de chlore des polydichlorophosphazènes de la revendication 8.

Office européen des brevets

# RAPPORT DE RECHERCHE EUROPEENNE

Numéro de la demande

**EP 90 40 2882**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,A | EP-A-0 026 685 (INST. MONDIAL DU PHOSPHATE)<br>* le document en entier * * page 6, ligne 13 - page 7, ligne 13 *<br>– – – | 1,3-9,2 | C 01 B 21/098<br>C 08 G 79/02 |
| A | EP-A-0 132 188 (SOC. NAT. ELF AQUITAINE)<br>* revendications 3, 4, 10 *<br>– – – | 1,3 | |
| D,A | EP-A-0 178 997 (SOC. NAT. ELF AQUITAINE)<br>– – – – – | | |

| DOMAINES TECHNIQUES RECHERCHES (Int. Cl.5) |
|---|
| C 01 B<br>C 08 G |

Le présent rapport de recherche a été établi pour toutes les revendications

| Lieu de la recherche | Date d'achèvement de la recherche | Examinateur |
|---|---|---|
| La Haye | 18 novembre 90 | ZALM W.E. |

CATEGORIE DES DOCUMENTS CITES

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention

E: document de brevet antérieur, mais publié à la date de dépôt ou après cette date
D: cité dans la demande
L: cité pour d'autres raisons

&: membre de la même famille, document correspondant